# EUROPÄISCHE PATENTSCHRIFT

(11) **EP 2 309 052 B1**
(45) Veröffentlichungstag und Bekanntmachung des Hinweises auf die Patenterteilung: **03.07.2013**
(21) Anmeldenummer: 10178858.6
(22) Anmeldetag: 23.09.2010
(51) Int. Cl.: D06F 39/00, A47L 15/42

(54) **Verfahren zur Rückgewinnung von Energie aus der Wärme von Abwasser eines wasserführenden Haushaltsgerätes**
Method for recovering energy from the heat of waste water of a water-bearing domestic appliance
Procédé de récupération d'énergie à partir de la chaleur d'eaux usées d'un appareil ménager transportant de l'eau

(30) Priorität: 09.10.2009 DE 102009045547
(43) Veröffentlichungstag der Anmeldung: 13.04.2011
(73) Patentinhaber: BSH Bosch und Siemens Hausgeräte GmbH, 81739 München (DE)
(72) Erfinder: Jerg, Helmut, 89537 Giengen (DE); Nannt, Hans-Peter, 89547 Gerstetten (DE); Paintner, Kai, 86477 Adelsried (DE); Wachinger, Thomas, 85250 Hohenzell (DE)

(56) Entgegenhaltungen:
- EP-A1- 2 064 982
- EP-A1- 2 096 203
- GB-A- 2 124 356

## Beschreibung

Die vorliegende Erfindung betrifft ein Verfahren zur Rückgewinnung von Energie aus der Wärme von Abwasser eines wasserführenden Haushaltsgerätes, insbesondere einer Geschirrspülmaschine oder einer Waschmaschine. Weiterhin betrifft die Erfindung ein wasserführendes Haushaltsgerät, insbesondere eine Geschirrspülmaschine oder eine Waschmaschine, insbesondere zur Durchführung eines erfindungsgemäßen Verfahrens, mit einer Wärmeübertragungseinrichtung zum Entziehen von Wärme aus Abwasser.

Handelsübliche wasserführende Haushaltsgeräte werden in aller Regel nach einem Betriebsprogramm gesteuert, welches mehrere aufeinanderfolgende Teilbetriebsgänge umfasst. So kann das Spülprogramm einer Geschirrspülmaschine einen Spülgang durchführen, der mindestens einen Vorspülgang, mindestens einen Reinigungsgang, mindestens einen Zwischenspülgang und mindestens einen Klarspülgang umfasst. Jeweils zu Beginn eines der genannten Teilspülgänge kann der Geschirrspülmaschine bei Bedarf Frischwasser aus einer geräteextemen Wasseranschlussvorrichtung wie z.B. einem Kaltwasserhahn zugeführt werden, welches ggf. aufgeheizt und dann für die Dauer des Spülganges umgewälzt wird. Zusätzlich oder unabhängig von einer solchen Frischwasserzufuhr kann für einen durchzuführenden Teilspülgang ggf. auch Spülflottenflüssigkeit eines vorausgehenden Teilspülgangs desselben Spülgangs und/oder eines vorhergehenden Spülgangs verwendet werden, So kann beispielsweise Spülflottenflüssigkeit aus dem Klarspülgang des vorherigen Spülgangs in einem sogenannten Flottenspeicher, d.h. Vorratsspeicherbehältnis, zwischengespeichert werden und für den Vorspülgang und/oder Reinigungsgang des Spülgangs eines nachfolgenden, neu gestarteten Geschirrspülprogramms herangezogen, d.h. wiederverwendet werden. Zu Ende des jeweiligen Teilspülgangs wird die Spülflottenflüssigkeit bzw. das Spülwasser ganz oder teilweise mittels einer Abwasserpumpe bzw. Laugenpumpe abgepumpt. Das bedeutet, das in denjenigen Teilspülgängen, die einen Aufheizvorgang für ihre zugemessene Spülflottenflüssigkeitsmenge umfassen, die in der jeweiligen Spülflottenflüssigkeitsmenge steckende Wärmeenergie verloren geht, wenn diese erwärmte Spülflottenflüssigkeitsmenge aus der Geschirrspülmaschine in eine Abwasserleitung abgepumpt wird. Im Fall, dass zur Durchführung der üblichen vier Teilspülgänge - im Einzelnen Vorspülen, Reinigen, Nachspülen, Klarspülen - des Spülgangs eines Spülprogramms viermal Frischwasser erhitzt wird, geht also die im Abwasser von vier Teilspülgängen enthaltene Wärmeenergie verloren.

Z.B. die DE 20 2006 019 482 U1 schlägt eine Anlage mit Wärmerückgewinnung aus Abwasser zur Vorwärmung des Frischwassers bei einer Geschirrspülmaschine vor. Die Anlage ist mit einem druckfesten Behälter ausgestattet, der durch eine im Inneren des Behälters liegende Membran in zwei voneinander getrennte Bereiche unterteilt ist. Zu Ende des aktuellen Spülganges wird dessen Abwasser in den unteren Bereich des Behälters geleitet, dadurch wird die Membran nach oben verschoben und das darin befindliche Frischwasser, welches durch einen vorangegangenen Spülgang erwärmt wurde, als Frischwasser für den nachfolgenden Spülgang in eine Warmwasservorlage und dann in den Spülraum gedrückt. Zwar ermöglicht dieses Prinzip die bei einer Geschirrspülmaschine notwendige stoffliche Trennung des Frischwassers und des Abwassers, allerdings wird nur ein geringer Teil der Abwasserwärme tatsächlich genutzt. So erfolgt der Wärmeübergang vom Abwasser auf das Frischwasser im Wesentlichen über die Membran. Prinzipbedingt führt das zu einer Angleichung der Temperatur des Abwassers an die des Frischwassers. Ist die gemeinsame Temperatur erreicht, so wird das Abwasser nicht mehr weiter abgekühlt. Das heißt, dem Abwasser wird die Wärmeenergie nur unvollständig entzogen. Zudem ergeben sich aufgrund der langen Verweilzeit von Abwasser und Frischwasser in dem Behälter weitere Verluste durch Abgabe von Wärme an die Umgebung.

Aus der EP 2 064 982 A1 ist eine Geschirrspülmaschine mit einer Wärmerückgewinnungseinrichtung bekannt. Dabei ist während des Erwärmens von Wasser vorgesehen, dieses mittels einer Zirkulationspumpe, welche das Wasser vom Sumpf in die Sprüharme fördert, im Spülbehälter umzuwälzen. Hierdurch wird eine große Menge an Energie über den Spülbehälter nach außen abgegeben.

Ferner ist aus der GB 2 124 356 A ein Wärmetauscher für eine Geschirrspülmaschine bekannt. Dabei schweigt sich die GB 2 124 356 A über die Integration des Wärmetauschers in eine Geschirrspülmaschine aus.

Aufgabe der vorliegenden Erfindung ist es somit, ein Verfahren und ein Haushaltsgerät bereitzustellen, bei dem der Wirkungsgrad einer Rückgewinnung von Energie aus Abwasser erhöht ist.

Gemäß der Erfindung wird diese Aufgabe bei einem Verfahren der eingangs genannten Art dadurch gelöst, dass das Abwasser durch eine Wärmeübertragungseinrichtung, die mindestens ein Wärmerohr, mindestens eine Wärmepumpe und/oder mindestens einen thermoelektrischen Generator umfasst, geführt wird, um ihm Wärme zu entziehen.

Ein Wärmerohr (englisch: "Heatpipe") enthält einen abgeschlossenen Raum, der mit einem Arbeitsfluid gefüllt ist. Außen am Wärmerohr ist je eine Wärmeübertragungsfläche für eine Wärmequelle und für eine Wärmesenke vorgesehen. Das Funktionsprinzip eines Wärmerohres besteht darin, dass das Arbeitsfluid an der Wärmeübertragungsfläche der Wärmequelle verdampft und dabei Wärme aufnimmt. Der entstandene Dampf strömt dann in Richtung der Wärmeübertragungsfläche der Wärmesenke, wo er aufgrund der niedrigeren Temperatur kondensiert und dabei die zuvor aufgenommene latente Wärme abgibt. Das nunmehr verflüssigte Arbeitsfluid kehrt dann insbesondere durch Schwerkraft und/oder durch Kapillarkraft zurück zu seinem Ausgangspunkt. Die äquivalente Wärmeleitfähigkeit eines so ausgebildeten Wärmerohres ist erheblich höher als die eines Metalls. Hierdurch ist es möglich, dem Abwasser in kurzer Zeit eine große Menge von Wärmeenergie zu entziehen. Daher fallen Verluste durch Abgabe von Wärme an die Umgebung weit weniger ins Gewicht, als dies bei dem oben beschriebenen Verfahren der Fall ist. Zudem kann die mit einem oder mehreren Wärmerohren ausgerüstete Wärmeübertragungseinrichtung wesentlich kompakter ausgebildet werden, als der vorbekannte druckfeste Behälter, der mit einer Membran ausgerüstet ist.

Bei einer Wärmepumpe entzieht ein Verdampfer die Wärme dem Abwasser, indem ein Arbeitsfluid bei niedrigem Druck verdampft wird. Das nun dampfförmige Arbeitsfluid wird durch einen Kompressor auf ein höheres Druckniveau gebracht. Durch Verflüssigung des dampfförmigen Arbeitsfluids werden die aufgenommene Wärme und die im Kompressor zugeführte Energie wieder frei gesetzt. Nach dem Verflüssigen wird das Arbeitsfluid in einem Expander auf das ursprüngliche Druckniveau entspannt. Die dem Abwasser mittels einer Wärmepumpe entzogene Energie beträgt ein Vielfaches der Energie, welche aufgewendet werden muss, um den Kompressor zu betreiben. Insgesamt kann so auf effiziente Weise Energie aus dem Abwasser des Haushaltsgerätes gewonnen werden.

Ein thermoelektrischer Generator umfasst wenigstens ein Peltierelement. Dieses kann insbesondere je ein p-dotiertes und ein n-dotiertes Halbleiterelement aufweisen. Werden die beiden Halbleiterelemente parallel angeordnet und an einem Ende mittels einer elektrisch leitenden Brücke, insbesondere Metallbrücke kurzgeschlossen, so entsteht zwischen den nicht kurzgeschlossenen Enden der Halbleiterelemente eine elektrische Spannung, sofern sich diese Enden auf einem anderen Temperaturniveau als die Brücke befinden. Wenn also eine Seite einer derartigen Anordnung mittels des Abwassers erwärmt wird, so fließt ein Teil der aufgenommenen Wärme auf die andere Seite des Peltierelements. Ein anderer Teil der aufgenommenen Energie wird jedoch in elektrische Energie umgewandelt. Die so erzeugte elektrische Energie kann für den Betrieb des Haushaltsgerätes oder eines anderen Gerätes genutzt werden.

Insgesamt betrachtet ermöglicht eine erfindungsgemäße Wärmeübertragungseinrichtung eine effiziente Rückgewinnung von Energie aus der Wärme von Abwasser des wasserführenden Haushaltsgeräts, wobei die Energie in Form von Wärme und/oder Elektrizität gewonnen wird. Beide Formen von Energie können einem nahezu beliebigen Bedarfsträger zugeführt werden.

Bevorzugt kann nach einer zweckmäßigen Ausführungsvariante das Abwasser, während ihm mittels der Wärmeübertragungseinrichtung Wärme entzogen wird, kontinuierlich bewegt werden. Dies führt zu einer besseren Wärmeübertragung, als bei einem Verfahren, bei dem die Wärme einem stehenden Abwasser entzogen wird.

Vorteilhafterweise kann das Abwasser in einem geschlossenen Abwasserumwälzkreislauf durch die Wärmeübertragungseinrichtung geführt werden. Im Vergleich zu Ausführungsbeispielen, bei denen das Abwasser durch die Wärmeübertragungseinrichtung geführt und dann unmittelbar über eine Abflussleitung nach Außen abgegeben wird, kann so die Effizienz der Energiegewinnung erhöht werden, insbesondere wenn eine kompaktbauende Wärmeübertragungseinrichtung verwendet wird.

Gemäß einer zweckmäßigen Weiterbildung kann das für einen Teilspülgang benötigte Frischwasser und/oder z.B. in einem Flottenspeicher zwischengespeicherte Spülflottenflüssigkeit durch die Wärmeübertragungseinrichtung geführt werden, um ihm dem Abwasser entzogene Wärme indirekt zuzuführen. Auf diese Weise kann die Energieeffizienz des Haushaltsgerätes in einfacher Weise erhöht werden, da ein wesentlicher Teil der einer Geschirrspülmaschine oder Waschmaschine zugeführten Energie gerade zur Erwärmung von Frischwasser aufgewendet werden muss. Unter einer indirekten Zuführung von Wärmeenergie wird dabei insbesondere eine Energiezuführung verstanden, bei der das Frischwasser und das Abwasser getrennt gehalten werden, um eine Verunreinigung des Frischwassers zu verhindern. Bevorzugt kann nach einer vorteilhaften Weiterbildung der Erfindung das Frischwasser in einem geschlossenen Frischwasserumwälzkreislauf durch die Wärmeübertragungseinrichtung geführt werden. Hierdurch ist es möglich, die dem Abwasser entzogene Wärme auch mit einer einfach und kompakt ausgeführten Wärmeübertragungseinrichtung in kurzer Zeit zuzuführen.

Besonders bevorzugt kann zwischen einem ersten Teilspülgang und einem nächstfolgenden Teilspülgang eines ablaufenden Spülgangs dem Abwasser des ersten Teilspülgangs Wärme entzogen und der Spülflottenflüssigkeit, insbesondere dem Frischwasser, für den nächstfolgenden Teilspülgang zugeführt werden. Das bedeutet, dass die Wärmeübertragung im Wesentlichen zwischen dem ersten Teilspülgang und dem nächstfolgenden Teilspülgang eines ablaufenden Spülgangs erfolgt. Da somit die Wärmeenergie nicht für einen längeren Zeitraum also beispielsweise bis zum nächsten oder übernächsten Spülgang zwischengespeichert wird, ergeben sich demgegenüber geringere Wärmeverluste an die Umgebung. Hierdurch wird die Gesamteffizienz gesteigert.

Ggf. kann es auch zweckmäßig sein, wenn zwischen einem ersten Betriebsgang und einem nächstfolgenden Betriebsgang dem Abwasser des ersten Betriebsganges Wärme entzogen und dem Frischwasser für den nächstfolgenden Betriebsgang zugeführt wird.

Wenn die Wärmeübertragungseinrichtung eine Vielzahl von Wärmeübertragungselementen umfasst, so kann es insbesondere vorteilhaft sein, wenn das Abwasser und die für den jeweiligen Teilspülgang zu verwendende Spülflottenflüssigkeit, insbesondere Frischwassermenge, an den Wärmeübertragungselementen im Gegenstrom vorbeigeführt werden. Wärmeübertragungselemente in diesem Sinne umfassen beispielsweise Wärmerohre, Wärmepumpen und /oder die wärmeübertragenden Elemente eines thermoelektrischen Generators, also beispielsweise n-dotierten Elemente, p-dotierte Elemente und Metallbrücken. Gegenstrom bedeutet insbesondere, dass das Frischwasser zuerst an dem jeweiligen Wärmeübertragungselement vorbeigeführt wird, an dem das Abwasser zuletzt vorbeigeführt wird. Beim Gegenstromverfahren entsteht an jedem Wärmeübertragungselement eine vergleichsweise große Temperaturdifferenz, so dass eine effiziente Wärmeübertragung möglich ist.

Gemäß der Erfindung wird die Aufgabe bei einem Haushaltsgerät der eingangs genannten Art dadurch gelöst, dass die Wärmeübertragungseinrichtung ein Wärmerohr, eine Wärmepumpe und/oder einen thermoelektrischen Generator umfasst. Ein derartig ausgebildetes wasserführendes Haushaltsgerät ermöglicht die Durchführung eines erfindungsgemäßen Verfahrens, so dass sich die dort beschriebenen Vorteile ergeben.

Vorteilhafterweise ist der Wärmeübertragungseinrichtung Abwasser über einen geschlossenen Abwasserumwälzkreislauf zuführbar, wobei im Abwasserumwälzkreislauf eine Abwasserpumpe zum Umwälzen des Abwassers vorgesehen ist. Im Vergleich zu einem pumpenlosen Abwasserumwälzkreislauf kann so die Strömungsgeschwindigkeit im Abwasserumwälzkreislauf erhöht werden, was eine raschere Wärmeübertragung ermöglicht.

Wenn im Abwasserumwälzkreislauf ein Ausgangsventil vorgesehen ist, über welches das Abwasser mittels der Abwasserpumpe in eine Abflussleitung pumpbar ist, so kann ein und dieselbe Abwasserpumpe des wasserführenden Haushaltsgeräts zum Umwälzen des Abwassers und zum Abpumpen des Abwassers verwendet werden. Das Haushaltsgerät ist daher besonders einfach aufgebaut und kann kostengünstig hergestellt werden. Grundsätzlich wäre es jedoch auch möglich, die Funktionen Umwälzen des Abwassers und Abpumpen des Abwassers mittels verschiedener Pumpen zu realisieren.

In einem vorteilhaften Ausführungsbeispiel kann eine Bodenwanne eines Spülbehälters oder eines Waschbehälters Teil des Abwasserumwälzkreislaufes sein. Eine derartige Bodenwanne ist bei einer üblichen Geschirrspülmaschine bzw. bei einer üblichen Waschmaschine vorhanden. Wenn eine derartige Bodenwanne in den Abwasserumwälzkreislauf integriert ist, kann auf einen separaten Ausgleichsbehälter verzichtet werden. Gleichwohl kann das Volumen des umzuwälzenden Abwassers größer sein als das Volumen der verwendeten Leitungen, Ventile, Pumpen usw.

Falls weiterhin der Wärmeübertragungseinrichtung über einen geschlossenen Frischwasserumwälzkreislauf Frischwasser zuführbar ist, so ist bevorzugt im Frischwasserumwälzkreislauf eine Umwälzpumpe zum Umwälzen des Frischwassers vorgesehen. Dies ermöglicht eine hinreichend hohe Strömungsgeschwindigkeit im Frischwasserumwälzkreislauf, so dass die Wärmeübertragung verbessert wird. Entsprechendes gilt im Fall, dass ein Flottenspeicher mit zwischengespeicherter Spülflottenflüssigkeit, insbesondere Brauchwasser, aus mindestens einem vorausgehenden Teilspülgang des aktuell ablaufenden Spülgangs oder eines vorausgehenden Spülgangs vorgesehen ist, und dass gewünscht wird, dass aus diesem Flottenspeicher Spülflottenflüssigkeit für den nächsten Teilspülgang des aktuell durchzuführenden Spülgangs bezogen und aufgewärmt bzw. aufgeheizt wird.

Vorteilhafterweise kann nach einer zweckmäßigen Weiterbildung der Erfindung im Frischwasserumwälzkreislauf stromaufwärts der Umwälzpumpe ein Ventil vorgesehen sein, durch welches die Umwälzpumpe mit einer Bodenwanne eines Spülbehälters oder eines Waschbehälters verbindbar ist. Bei dem Ventil kann es sich beispielsweise um ein Zwei-Wege-Ventil handeln. Dabei ist stromabwärts der Umwälzpumpe ein weiteres Ventil vorgesehen, über welches mittels der Umwälzpumpe Spülwasser aus der Bodenwanne zu einer Wassereinspeisung des Spülbehälters oder des Waschbehälters führbar ist. Das weitere Ventil kann eine Wasserweiche sein, welche es ermöglicht, dass das Spülwasser selektiv an verschiedene Elemente der Wassereinspeisung abgegeben wird. So kann es sich bei der Wassereinspeisung beispielsweise um eine Sprüheinrichtung eines Spülbehälters handeln, die einen oberen und einen unteren Sprüharm sowie ggf. eine zusätzliche Dachbrause umfasst, wobei die Wasserweiche so ausgebildet sein kann, dass das Wasser entweder an den oberen oder an den unteren Sprüharm oder an beide Sprüharme gleichzeitig verteilt wird.

Eine entsprechende Betätigung des ersten Ventils und des zweiten Ventils ermöglicht es, Spülwasser im Spülbehälter bzw. Waschwasser in einem Waschbehälter umzuwälzen. Mit nur einer Umwälzpumpe ist es folglich möglich, während eines Spül- oder Waschganges Spülwasser umzuwälzen, während dieselbe Umwälzpumpe zwischen zwei Wasch- oder Spülgängen als Umwälzpumpe für das zu erwärmende Frischwasser verwendet werden kann. Es wäre jedoch auch möglich, die Funktionen Umwälzen des Frischwassers und Umwälzen des Spülwassers durch getrennte Pumpen zu realisieren.

Bevorzugt ist im Frischwasserumwälzkreislauf ein Frischwasserausgleichsbehälter vorgesehen. Hierdurch wird ermöglicht, dass die Frischwassermenge an den jeweils folgenden Spül- oder Waschgang exakt angepasst werden kann.

Entsprechendes gilt im Fall, dass ein Flottenspeicher bzw. geräteseitiger Vorratsbehälter mit zwischengespeicherter Spülflottenflüssigkeit, insbesondere Brauchwasser, aus mindestens einem vorausgehenden Teilspülgang des aktuell ablaufenden Spülgangs oder eines vorausgehenden Spülgangs vorgesehen ist, und dass gewünscht wird, dass aus diesem Flottenspeicher Spülflottenflüssigkeit für den nächsten Teilspülgang des aktuell durchzuführenden Spülgangs bezogen und aufgewärmt bzw. aufgeheizt wird. Anstelle von Frischwasser wird also zwischengespeicherte Spülflottenflüssigkeit, insbesondere Brauchwasser, aus diesem Flottenspeicher dem Flüssigkeitskreislaufsystem des jeweiligen wasserführenden Haushaltsgeräts zugeführt und nach den oben erläuterten Prinzipien in analoger Weise mit Hilfe des Abwassers erwärmt.

Zusammenfassend sei festgestellt, dass die vorliegende Erfindung neue Möglichkeiten zur Wärmerückgewinnung bei wasserführenden Haushaltsgeräten bereitstellt. So kann die Wärmeenergie des Abwassers insbesondere über ein oder mehrere thermoelektrische Generatoren (TEG) gewonnen und als elektrische Energie (z. B. in Akkus) gespeichert und bei Bedarf wieder in Energie umgewandelt werden (Seebeck-Effekt - Gegenteil von Peltiereffekt). Weiterhin kann die Wärmeenergie des Abwassers zusätzlich oder unabhängig hiervon über ein oder mehrere Wärmepumpen gewonnen und zu den zu erwärmenden Stellen transportiert werden. Ebenso kann die Wärmeenergie des Abwassers über ein oder mehrere Heatpipes gewonnen und zu den zu erwärmenden Stellen transportiert werden.

Die Vorteile bestehen insbesondere darin, dass die Energieeffizienz von wasserführenden Haushaltsgeräten erhöht wird, was die Umweltverträglichkeit verbessert und die Betriebskosten senkt.

Sonstige vorteilhafte Aus- und Weiterbildungen der Erfindung sind in den Unteransprüchen wiedergegeben.

Die vorstehend erläuterten und/oder in den Unteransprüchen wiedergegebenen vorteilhaften Aus- und Weiterbildungen der Erfindung können dabei einzeln oder aber auch in beliebiger Kombination miteinander bei dem erfindungsgemäßen wasserführenden Haushaltsgerät zur Anwendung kommen.

Die Erfindung und ihre Weiterbildungen sowie deren Vorteile werden nachfolgend anhand von Zeichnungen näher erläutert.

Es zeigen:
- **Figur 1**: als vorteilhaftes Ausführungsbeispiel eines erfindungsgemäßen Haushaltsgerätes eine Haushalts-Geschirrspülmaschine in sche- matischer Darstellung, wobei deren Funktion während eines Spül- gangs veranschaulicht ist,
- **Figur 2**: die Geschirrspülmaschine der Figur 1, wobei die Rückgewinnung von Energie aus Abwasser veranschaulicht ist,
- **Figur 3**: eine Wärmeübertragungseinrichtung mit Wärmerohren in sche- matischer Darstellung,
- **Figur 4**: eine Wärmeübertragungseinrichtung mit einer Wärmepumpe in schematischer Darstellung, und
- **Figur 5**: eine Wärmeübertragungseinrichtung mit einem thermoelektri- schen Generator in schematischer Darstellung.

Elemente mit gleicher Funktion sind in den Figuren jeweils mit denselben Bezugszeichen versehen.

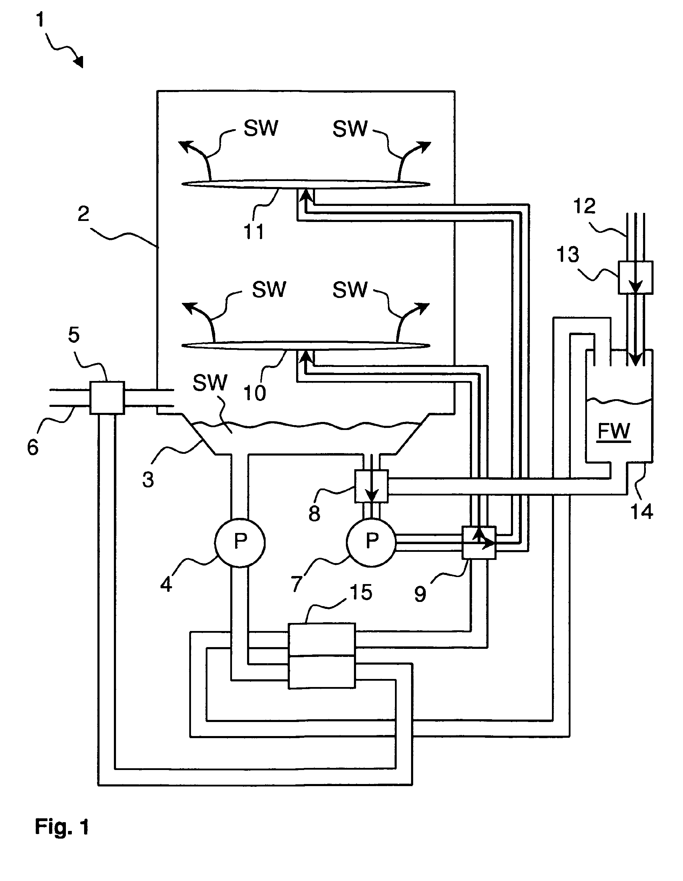

In Figur 1 ist eine Geschirrspülmaschine 1 als Beispiel für ein erfindungsgemäßes Haushaltsgerät in einer schematischen Ansicht dargestellt, wobei die Funktionsweise der Geschirrspülmaschine 1 während eines Spülganges veranschaulicht ist. Dabei sind lediglich diejenigen Bauteile der Geschirrspülmaschine 1 dargestellt und erläutert, welche für das Verständnis der Erfindung erforderlich sind.

Die Geschirrspülmaschine 1 weist einen Spülbehälter 2 auf, der eine Bodenwanne 3 umfasst. Die Geschirrspülmaschine 1 weist weiterhin eine Abwasserpumpe 4, ein Ausgangsventil 5 und eine Abflussleitung 6 auf, welche während eines Spülganges, also beispielsweise während dessen Vorspülganges, Reinigungsganges oder Klarspülganges im Regelfall ohne Funktion sind.

Die Geschirrspülmaschine 1 umfasst ferner eine weitere Pumpe, nämlich eine Umwälzpumpe 7, welche über ein Zwei-Wege-Ventil 8 Spülwasser SW aus der Bodenwanne 3 des Spülbehälters 2, insbesondere dessen Pumpentopf, über eine Wasserweiche 9 einem unteren Sprüharm 10 und einem oberen Sprüharm 11 zuführt. Die Wasserweiche 9 wird dabei nach einem vorgegeben Programm mittels einer nicht gezeigten Steuerungseinrichtung so gesteuert, dass das Spülwasser, d.h. Spülflottenflüssigkeit je nach Art und Phase des Spülganges entweder nur dem unteren Sprüharm 10 oder dem oberen Sprüharm 11 oder beiden Sprüharmen 10, 11 zugeführt wird. Dabei könnten auch weitere Sprühelemente, beispielsweise an der Decke des Spülbehälters 2 angeordnete Sprühelemente, vorgesehen sein. Das in den Spülbehälter 2 eingebrachte Spülwasser SW wirkt auf nicht dargestelltes Spülgut ein und läuft dann zurück in die Bodenwanne 3. Während eines derartigen Spülganges oder nach dessen Ende wird Frischwasser über eine Zuflussleitung 12, gesteuert mittels eines Eingangsventils 13, in einen Frischwasserausgleichsbehälter 14 geleitet. Nach Abschluss eines Spülganges wird das bis dahin umgewälzte Spülwasser SW zu Abwasser, das allerdings eine erhebliche Menge an Wärmeenergie beinhaltet. Um diese Wärmeenergie dem Abwasser zu entziehen, ist eine Wärmeübertragungseinrichtung 15 vorgesehen, mittels derer Wärme vom bisher als Spülwasser SW verwendeten Abwasser an das zugeführte Frischwasser FW übertragen werden kann.

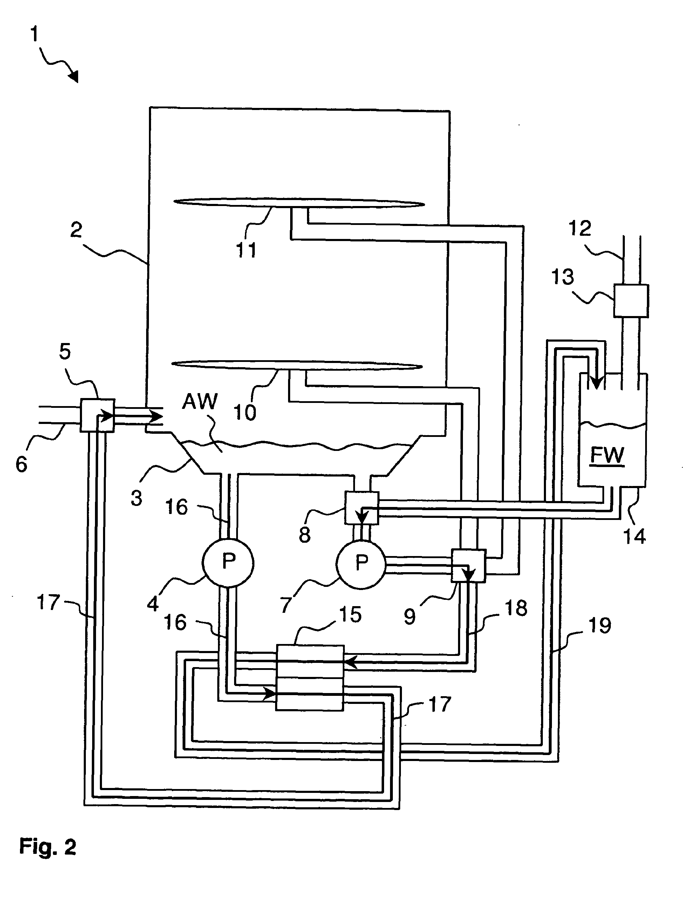

Die Übertragung der Wärmeenergie vom Abwasser AW auf das Frischwasser FW ist in Figur 2 veranschaulicht. Das sich in der Bodenwanne 3, insbesondere deren Pumpentopf, sammelnde Abwasser AW wird über einen Vorlauf 16 zur Wärmeübertragungseinrichtung 15 geführt. Hierzu wird die Abwasserpumpe 4 eingeschaltet. Über einen Rücklauf 17 wird das Abwasser AW von der Wärmeübertragungseinrichtung 15 zurück in die Bodenwanne 3 des Spülbehälters 2 gefördert. Dabei ist das Ausgangsventil 5 so eingestellt, dass das ihm zugeführte Abwasser AW ausschließlich in die Bodenwanne 3 zurückgefördert wird. Zeitgleich wird das Frischwasser FW aus dem Frischwasserausgleichsbehälter 14 über einen Vorlauf 18 zur Wärmeübertragungseinrichtung 15 gepumpt. Dabei ist das Zwei-Wege-Ventil 8 so eingestellt, dass der Frischwasserausgleichsbehälter 14 mit der Umwälzpumpe 7 verbunden, die Verbindung zur Bodenwanne 3 jedoch unterbrochen ist. Die Frischwasserweiche 9 ist so eingestellt, dass das Frischwasser FW ausschließlich zur Wärmeübertragungseinrichtung 15 und nicht zu den Sprüharmen 10, 11 geleitet wird. Von der Wärmeübertragungseinrichtung 15 wird das Frischwasser FW über einen Rücklauf 19 zum Frischwasserausgleichsbehälter 14 zurückgepumpt. Der Vorlauf 18 und der Rücklauf 19 bilden damit einen geschlossenen Frischwasserumwälzkreislauf, wobei die Umwälzung des Frischwassers FW durch die Umwälzpumpe 7 bewirkt wird.

In der Wärmeübertragungseinrichtung 15 wird dabei Wärme von dem Abwasser AW auf das Frischwasser FW im Gegenstromprinzip übertragen. Nach Abschluss der Wärmeübertragung wird das Ausgangsventil 5 derart betätigt, dass das Abwasser AW durch die Abwasserpumpe 4 zur Abflussleitung 6 geleitet wird. Wenn das Abwasser AW aus der Bodenwanne 3 abgepumpt ist, wird die Wasserweiche 9 so betätigt, dass das Frischwasser FW über die Sprüharme 10, 11 in den Spülbehälter gelangt. Wenn die gewünschte Menge von Frischwasser sich im Spülbehälter 2 befindet, wird das Zwei-Wege-Ventil 8 in seine ursprüngliche Lage zurückversetzt, wodurch zwischen der Bodenwanne 3 und der Umwälzpumpe 7 ein Flüssigkeitsweg vorhanden ist. Nun beginnt ein neuer Spülgang, bei der das gerade zugeführte und durch Abwasser aus mindestens einem Teilspülgang eines zeitlich vorausgehenden Spülgangs erwärmte Frischwasser FW als Spülwasser mittels der Umwälzpumpe umgewälzt wird.

Es versteht sich von selbst, dass die Abwasserpumpe 4, die Umwälzpumpe 7, die Ventile 5, 8, 13 und die Wasserweiche 9 durch eine Steuereinrichtung automatisch gesteuert werden können.

Selbstverständlich ist es auch möglich, anstelle von Frischwasser des Frischwasserausgleichsbehälters 14 in analoger Weise Spülflottenflüssigkeit, insbesondere Brauchwasser, aus mindestens einem Teilspülgang eines vorausgehenden Spülgangs, das in einem Flottenspeicher bzw. Vorratsbehälter der Geschirrspülmaschine zwischengespeichert worden ist, für mindestens einen Teilspülgang eines zeitlich später folgenden Spülgangs eines neu gestarteten Geschirrspülprogramms teilweise oder ganz zu verwenden und mittels des Abwassers aus mindestens einem Teilspülgang des vorausgehenden Spülgangs zu erwärmen. Der Frischwasserausgleichsbehälter 14 ist also bei dieser alternativen Ausführungsvariante durch einen Flottenspeicher ersetzt, welcher mit dem Flüssigkeitskreislaufsystem der Geschirrspülmaschine in Verbindung steht. Er kann vorzugsweise an der Außenseite einer Seitenwand des Spülbehälters angebracht sein. Er kann insbesondere über die Wasserweiche 9 mittels der Umwälzpumpe befüllt werden. Der Frischwasserzulauf 12 führt dann nicht über diesen Behälter 14, sondern direkt zur Bodenwanne 3, insbesondere deren Pumpensumpf.

Insbesondere kann es ggf. sogar zweckmäßig sein, die Spülflottenflüssigkeit für einen Teilspülgang eines ablaufenden Spülgangs mittels des Abwassers eines zeitlich vorausgehenden Teilspülgangs desselben Spülgangs unter Zuhilfenahme der Wärmeübertragungseinrichtung 15 zu erwärmen.

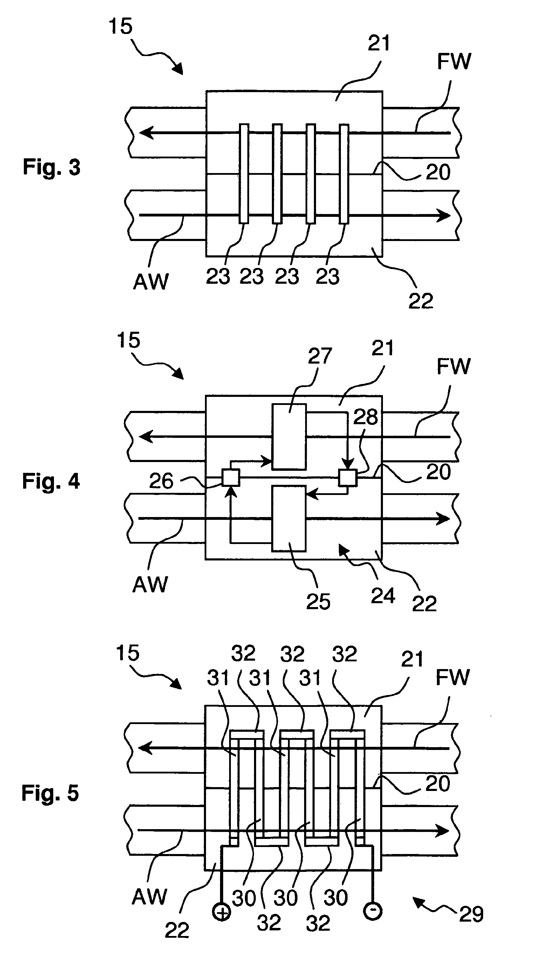

Figur 3 zeigt ein erstes Ausführungsbeispiel der Wärmeübertragungseinrichtung 15. Diese weist eine Trennwand 20 auf, die einen Frischwasserbereich 21 von einem Abwasserbereich 22 trennt, um eine Vermengung von Frischwasser FW und Abwasser AW zu verhindern. Vom Abwasserbereich 22 durch die Trennwand 20 hindurch erstrecken sich mehrere Wärmerohre 23 bis in den Frischwasserbereich 21. Wird also der Abwasserbereich 22 wie dargestellt von Abwasser AW durchströmt und gleichzeitig der Frischwasserbereich 21 durch Frischwasser FW, so ergibt sich eine effiziente Übertragung von Wärme vom Abwasser AW zum Frischwasser FW. Zur Verbesserung der Effizienz der Wärmeübertragungseinrichtung 15 wird dabei das Abwasser AW und das Frischwasser FW im Gegenstromverfahren durch die Wärmeübertragungseinrichtung 15 geführt. Die Trennwand 20 trägt lediglich zu einem geringen Teil der Wärmeübertragung bei. Der weitaus größte Teil der Wärme wird wegen ihres geringen Wärmeleitwiderstandes durch die Wärmerohre 23 übertragen.

Figur 4 zeigt ein weiteres vorteilhaftes Beispiel einer Wärmeübertragungseinrichtung 15, wobei die Wärmeübertragung mittels einer Wärmepumpe 24 erfolgt. Die Wärmepumpe 24 umfasst einen Verdampfer 25, der im Abwasserbereich 22 angeordnet ist, um dem Abwasser AW Wärme zu entziehen. Ein im Verdampfer 25 verdampftes Arbeitsfluid wird mittels eines Kompressors 26 auf ein höheres Druckniveau gebracht und einem Verflüssiger 27 zugeführt, der im Frischwasserbereich 21 angeordnet ist. Wenn dort das Arbeitsfluid verflüssigt wird, kann die dabei abgegebene Wärme durch das Frischwasser FW aufgenommen werden. Das Arbeitsfluid der Wärmepumpe 24 wird dann in einem Expander 28 entspannt und erneut dem Verdampfer 25 zugeführt. Wenngleich für den vorliegenden Zweck eine Wärmepumpe 24 im Regelfall ausreichend ist, könnte die Wärmeübertragungseinrichtung 15 auch mehrere Wärmepumpen 24 umfassen.

Figur 5 zeigt ein drittes Ausführungsbeispiel einer Wärmeübertragungseinrichtung 15, welche einen thermoelektrischen Generator 29 umfasst. Dabei erstrecken sich mehrere p-dotierte Elemente 30 von dem Abwasserbereich 22 durch die Trennwand 20 hindurch bis in den Frischwasserbereich 21. Ebenso erstreckt sich eine Vielzahl von n-dotierten Elementen 31 von dem Abwasserbereich 22 bis zum Frischwasserbereich 21. P-dotierte Elemente 30 und n-dotierte Elemente 31 sind dabei abwechselnd angeordnet und jeweils über eine Metallbrücke 32 an einem Ende mit einem benachbarten Element verbunden. Es ergibt sich eine mäanderförmige Struktur an deren Enden eine Gleichspannung abgreifbar ist, welche durch die Temperaturdifferenz von Abwasser AW zu Frischwasser FW bewirkt wird. Die dem Abwasser AW entzogene Wärmeenergie wird dabei zu einem Teil in elektrische Energie umgewandelt und zu einem anderen Teil als Wärmeenergie auf das Frischwasser FW übertragen. Die elektrische Energie kann insbesondere in einem elektrischen Energiespeicher wie z.B. einer Batterie oder einem Akkumulator gespeichert werden. Sie steht dann zur elektrischen Erwärmung von Spülflottenflüssigkeit mittels einer elektrischen Heizeinrichtung, insbesondere mittels eines Durchlauferhitzers, zur Verfügung.

Zusammenfassend betrachtet ist hier also auslassseitig hinter der Abwasserpumpe bzw. Laugenpumpe der Geschirrspülmaschine mindestens eine Rekuperationsvorrichtung zur Rückgewinnung von elektrischer Energie aus der Wärmeenergie von Abwasser vorgesehen.

**Bezugszeichenliste**

| | |
|---|---|
| 1 | Geschirrspülmaschine |
| 2 | Spülbehälter |
| 3 | Bodenwanne |
| 4 | Abwasserpumpe |
| 5 | Ausgangsventil |
| 6 | Abflussleitung |
| 7 | Umwälzpumpe |
| 8 | Zweiwegeventil |
| 9 | Wasserweiche |
| 10 | Unterer Sprüharm |
| 11 | Oberer Sprüharm |
| 12 | Zuflussleitung |
| 13 | Eingangsventil |
| 14 | Frischwasserausgleichsbehälter |
| 15 | Wärmeübertragungseinrichtung |
| 16 | Vorlauf (für Abwasser) |
| 17 | Rücklauf (für Abwasser) |
| 18 | Vorlauf (für Frischwasser) |
| 19 | Rücklauf (für Abwasser) |
| 20 | Trennwand |
| 21 | Frischwasserbereich |
| 22 | Abwasserbereich |
| 23 | Wärmerohr |
| 24 | Wärmepumpe |
| 25 | Verdampfer |
| 26 | Kompressor |
| 27 | Verflüssiger |
| 28 | Expander |
| 29 | Thermoelektrischer Generator |
| 30 | p-dotiertes Element |
| 31 | n-dotiertes Element |
| 32 | Metallbrücke |
| AW | Abwasser |
| FW | Frischwasser |
| SW | Spülwasser |

## Patentansprüche

1. Verfahren zur Rückgewinnung von Energie aus der Wärme von Abwasser (AW) eines wasserführenden Haushaltsgerätes, insbesondere einer Geschirrspülmaschine (1) oder einer Waschmaschine, wobei das Abwasser (AW) durch eine Wärmeübertragungseinrichtung (15), die ein Wärmerohr (23), eine Wärmepumpe (24) und/oder einen thermoelektrischen Generator (29) umfasst, geführt wird, um ihm Wärme zu entziehen, wobei das Frischwasser (FW) in einem geschlossenen Frischwasserumwälzkreislauf (18, 19) durch die Wärmeübertragungseinrichtung (15) geführt wird, **dadurch gekennzeichnet, dass** im Frischwasserumwälzkreislauf (18, 19) ein Frischwasserausgleichsbehälter (14) vorgesehen ist.

2. Verfahren nach Anspruch 1, **dadurch gekennzeichnet, dass** das Abwasser (AW), während ihm mittels der Wärmeübertragungseinrichtung (15) Wärme entzogen wird, kontinuierlich bewegt wird.

3. Verfahren nach einem oder mehreren der vorherigen Ansprüche, **dadurch gekennzeichnet, dass** das Abwasser (AW) in einem geschlossenen Abwasserumwälzkreislauf (16, 17) durch die Wärmeübertragungseinrichtung (15) geführt wird.

4. Verfahren nach einem oder mehreren der vorherigen Ansprüche, **dadurch gekennzeichnet, dass** Frischwasser (FW) durch die Wärmeübertragungseinrichtung (15) geführt wird, um ihm dem Abwasser (AM entzogene Wärme indirekt zuzuführen.

5. Verfahren nach einem oder mehreren der vorherigen Ansprüche, **dadurch gekennzeichnet, dass** zwischen einem ersten Betriebsgang und einem nächstfolgenden Betriebsgang dem Abwasser (AW) des ersten Betriebsganges Wärme entzogen und dem Frischwasser (FW) für den nächstfolgenden Betriebsgang zugeführt wird.

6. Verfahren nach einem oder mehreren der vorherigen Ansprüche, **dadurch gekennzeichnet, dass** die Wärmeübertragungseinrichtung (15) eine Vielzahl von Wärmeübertragungselementen (23; 24; 30, 31, 32) umfasst, an denen das Abwasser (AW) und das Frischwasser (FW) im Gegenstrom geführt werden.

7. Wasserführendes Haushaltsgerät, insbesondere Geschirrspülmaschine (1) oder Waschmaschine, insbesondere zur Durchführung eines Verfahrens nach einem oder mehreren der vorherigen Ansprüche, mit einer Wärmeübertragungseinrichtung (15) zum Entziehen von Wärme aus Abwasser (AW), wobei die Wärmeübertragungseinrichtung (15) ein Wärmerohr (23), eine Wärmepumpe (24) und/oder einen thermoelektrischen Generator (29) umfasst, wobei der Wärmeübertragungseinrichtung (15) über einen geschlossenen Frischwasserumwälzkreislauf (18, 19) Frischwasser (FW) zuführbar ist und wobei im Frischwasserumwälzkreislauf (18, 19) eine Umwälzpumpe (7) zum Umwälzen des Frischwassers (FW) vorgesehen ist, **dadurch gekennzeichnet, dass** im Frischwasserumwälzkreislauf (18, 19) ein Frischwasserausgleichsbehälter (14) vorgesehen ist.

8. Wasserführendes Haushaltsgerät nach dem vorherigen Anspruch, **dadurch gekennzeichnet, dass** der Wärmeübertragungseinrichtung (15) über einen geschlossenen Abwasserumwälzkreislauf (16, 17) Abwasser (AW) zuführbar ist, wobei im Abwasserumwälzkreislauf (16, 17) eine Abwasserpumpe (4) zum Umwälzen des Abwassers (AW) vorgesehen ist.

9. Wasserführendes Haushaltsgerät nach Anspruch 7 oder 8, **dadurch gekennzeichnet, dass** im Abwasserumwälzkreislauf (16, 17) ein Ausgangsventil (5) vorgesehen ist, wobei das Abwasser (AW) mittels der Abwasserpumpe (4) über das Ausgangsventil (5) in eine Abflussleitung (6) pumpbar ist.

10. Wasserführendes Haushaltsgerät nach einem oder mehreren der Ansprüche 7 bis 9, **dadurch gekennzeichnet, dass** eine Bodenwanne (3) eines Spülbehälters (2) oder eines Waschbehälters Teil des Abwasserumwälzkreislaufs (16, 17) ist.

11. Wasserführendes Haushaltsgerät nach einem oder mehreren der Ansprüche 7 bis 10, **dadurch gekennzeichnet, dass** im Frischwasserumwälzkreislauf (18, 19) stromaufwärts der Umwälzpumpe (7) ein Ventil (8), beispielsweise ein Zwei-Wege-Ventil (8), vorgesehen ist, durch welches die Umwälzpumpe (7) mit einer Bodenwanne (3) eines Spülbehälters (2) oder eines Waschbehälters verbindbar ist und dass stromabwärts der Umwälzpumpe (7) ein weiteres Ventil (9), beispielsweise eine Wasserweiche (9), vorgesehen ist, über welche mittels der Umwälzpumpe (7) Spülwasser (SW) aus der Bodenwanne (3) einer Wassereinspeisung, beispielsweise einer Sprüheinrichtung (10, 11), des Spülbehälters (2) oder des Waschbehälters zuführbar ist.

## Claims

1. Method for recovering energy from the heat of waste water (AW) of a water-conducting domestic appliance, in particular a dishwasher (1) or a washing machine, wherein the waste water (AW) is conducted through a heat transfer facility (15) which comprises a heat pipe (23), a heat pump (24) and/or a thermo-electric generator (29), to extract heat therefrom, the fresh water (FW) being conducted through the heat transfer facility (15) in a closed fresh water circulation circuit (18, 19) **characterised in that** a fresh water equalisation container (14) is provided in the fresh water circulation circuit (18, 19).

2. Method according to claim 1, **characterised in that** the waste water (AW) is moved continuously while heat is being extracted therefrom by means of the heat transfer facility (15).

3. Method according to one or more of the preceding claims, **characterised in that** the waste water (AW) is conducted in a closed waste water circulation circuit (16, 17) through the heat transfer facility (15).

4. Method according to one or more of the preceding claims, **characterised in that** fresh water (FW) is conducted through the heat transfer facility (15) so that it is supplied indirectly with heat extracted from the waste water (AW).

5. Method according to one or more of the preceding claims, **characterised in that** between a first operating cycle and a following operating cycle heat is extracted from the waste water (AW) of the first operating cycle and supplied to the fresh water (FW) for the following operating cycle.

6. Method according to one or more of the preceding claims, **characterised in that** the heat transfer facility (15) comprises a plurality of heat transfer elements (23; 24; 30, 31, 32) past which the waste water (AW) and the fresh water (FW) are conducted in counter flow.

7. Water-conducting domestic appliance, in particular a dishwasher (1) or washing machine, in particular for performing a method according to one or more of the preceding claims, having a heat transfer facility (15) for extracting heat from waste water (AW), wherein the heat transfer facility (15) comprises a heat pipe (23), a heat pump (24) and/or a thermo-electric generator (29), it being possible to supply fresh water (FW) to the heat transfer facility (15) by way of a closed fresh water circulation circuit (18, 19) and a circulating pump (7) being provided in the fresh water circulation circuit (18, 19) to circulate the fresh water (FW), **characterised in that** a fresh water equalisation container (14) is provided in the fresh water circulation circuit (18, 19).

8. Water-conducting domestic appliance according to the preceding claim, **characterised in that** waste water (AW) can be supplied to the heat transfer facility (15) by way of a closed waste water circulation circuit (16, 17), a drain pump (4) for circulating the waste water (AW) being provided in the waste water circulation circuit (16, 17).

9. Water-conducting domestic appliance according to claim 7 or 8, **characterised in that** an outlet valve (5) is provided in the waste water circulation circuit (16, 17), it being possible for the waste water (AW) to be pumped by means of the drain pump (4) by way of the outlet valve (5) into a drain line (6).

10. Water-conducting domestic appliance according to one or more of claims 7 to 9, **characterised in that** a base trough (3) of a wash compartment (2) or tub is part of the waste water circulation circuit (16, 17).

11. Water-conducting domestic appliance according to one or more of claims 7 to 10, **characterised in that in that** a valve (8), for example a two-way valve (8), is provided in the fresh water circulation circuit (18, 19) upstream of the circulating pump (7), by which the circulating pump (7) can be connected to a base trough (3) of a wash compartment (2) or tub and **in that** downstream of the circulating pump (7) a further valve (9), for example a water switch (9), is provided, by way of which wash water (SW) can be supplied from the base trough (3) to a water feed, for example a spray facility (10, 11), of the wash compartment (2) or tub by means of the circulating pump (7).

## Revendications

1. Procédé de récupération d'énergie à partir de la chaleur des eaux usées (AW) d'un appareil ménager à circulation d'eau, notamment d'un lave-vaisselle (1) ou d'un lave-linge, les eaux usées (AW) étant conduites à travers un dispositif de transfert de chaleur (15), qui comprend un tube de chaleur (23), une pompe à chaleur (24) et/ou un générateur thermoélectrique (29), afin de leur extraire de la chaleur, l'eau fraîche (FW) étant conduite dans un circuit fermé de circulation d'eau fraîche (18, 19) à travers le dispositif de transfert de chaleur (15), **caractérisé en ce qu'**un réservoir de compensation d'eau fraîche (14) est ménagé dans le circuit de circulation d'eau fraîche (18, 19).

2. Procédé selon la revendication 1, **caractérisé en ce que** les eaux usées (AW) sont continuellement en mouvement, pendant que de la chaleur leur est extraite au moyen du dispositif de transfert de chaleur (15).

3. Procédé selon l'une quelconque ou plusieurs des revendications précédentes, **caractérisé en ce que** les eaux usées (AW) sont conduites dans un circuit fermé de circulation d'eaux usées (16, 17) à travers le dispositif de transfert de chaleur (15).

4. Procédé selon l'une quelconque ou plusieurs des revendications précédentes, **caractérisé en ce que** l'eau fraîche (FW) est conduite à travers le dispositif de transfert de chaleur (15) afin de lui amener indirectement la chaleur extraite des eaux usées (AW).

5. Procédé selon l'une quelconque ou plusieurs des revendications précédentes, **caractérisé en ce qu'**entre une première étape de fonctionnement et une étape de fonctionnement subséquente, de la chaleur est extraite des eaux usées (AW) de la première étape de fonctionnement et amenée à l'eau fraîche (FW) pour l'étape de fonctionnement subséquente.

6. Procédé selon l'une quelconque ou plusieurs des revendications précédentes, **caractérisé en ce que** le dispositif de transfert de chaleur (15) comprend une pluralité d'éléments de transfert de chaleur (23 ; 24 ; 30, 31, 32) sur lesquels les eaux usées (AW) et l'eau fraîche (FW) sont menées à contre-courant.

7. Appareil ménager à circulation d'eau, notamment lave-vaisselle (1) ou lave-linge, notamment pour la réalisation d'un procédé selon l'une quelconque ou plusieurs des revendications précédentes, comprenant un dispositif de transfert de chaleur (15) destiné à extraire la chaleur des eaux usées (AW), le dispositif de transfert de chaleur (15) comprenant un tube de chaleur (23), une pompe à chaleur (24) et/ou un générateur thermoélectrique (29), de l'eau fraîche (FW) pouvant être amenée au dispositif de transfert de chaleur (15) par l'intermédiaire d'un circuit fermé de circulation d'eau fraîche (18, 19) et une pompe de circulation (7) destinée à mettre l'eau fraîche (FW) en circulation étant ménagée dans le circuit de circulation d'eau fraîche (18, 19), **caractérisé en ce qu'**un réservoir de compensation d'eau fraîche (14) est ménagé dans le circuit de circulation d'eau fraîche (18, 19).

8. Appareil ménager à circulation d'eau selon la revendication précédente, **caractérisé en ce que** les eaux usées (AW) peuvent être amenées au dispositif de transfert de chaleur (15) par l'intermédiaire d'un circuit fermé de circulation d'eaux usées (16, 17), une pompe à eaux usées (4) destinée à mettre les eaux usées (AW) en circulation étant ménagée dans le circuit de circulation des eaux usées.

9. Appareil ménager à circulation d'eau selon la revendication 7 ou 8, **caractérisé en ce qu'**une vanne de sortie (5) est ménagée dans le circuit de circulation des eaux usées (16, 17), les eaux usées (AW) pouvant être pompées dans une conduite d'évacuation (6) au moyen de la pompe à eaux usées (4) par l'intermédiaire de la vanne de sortie (5).

10. Procédé selon l'une quelconque ou plusieurs des revendications 7 à 9, **caractérisé en ce qu'**une cuve de fond (3) d'un réservoir de rinçage (2) ou d'un réservoir de lavage fait partie du circuit de circulation des eaux usées (16, 17).

11. Procédé selon l'une quelconque ou plusieurs des revendications 7 à 10, **caractérisé en ce qu'**une vanne (8), par exemple une vanne à deux voies (8), est ménagée dans le circuit de circulation d'eau fraîche (18, 19) en amont de la pompe de circulation (7), au moyen de laquelle vanne la pompe de circulation (7) peut être reliée à une cuve de fond (3) d'un réservoir de rinçage (2) ou d'un réservoir de lavage, et **en ce qu'**une vanne supplémentaire (9), par exemple un branchement d'eau (9), est ménagée en aval de la pompe de circulation (7), par l'intermédiaire de laquelle vanne supplémentaire l'eau de rinçage (SW) provenant de la cuve de fond (3) peut être amenée à une alimentation d'eau, par exemple à un dispositif d'arrosage (10, 11), du réservoir de rinçage (2) ou du réservoir de lavage au moyen de la pompe de circulation (7).
